# EUROPÄISCHE PATENTSCHRIFT

(11) **EP 1 587 244 B1**
(45) Veröffentlichungstag und Bekanntmachung des Hinweises auf die Patenterteilung: **19.03.2008**
(21) Anmeldenummer: 04009030.0
(22) Anmeldetag: 15.04.2004
(51) Int. Cl.: H04L 12/24

(54) **Verfahren zur Konfiguration einer Filtervorrichtung für einen in Frames organisierten Datenstrom, und Protokolltester**
Method of configuring a filter device for a data stream comprising frames, and protocol tester
Procédé de configuration d'un dispositif de filtrage pour un flux de données comprenant des trames, et testeur de protocole

(43) Veröffentlichungstag der Anmeldung: 19.10.2005
(73) Patentinhaber: Tektronix International Sales GmbH, 8212 Neuhausen (CH)
(72) Erfinder: Vehse, Andreas, 13585 Berlin (DE); Wiedemann, Mike, 14612 Falkensee (DE)
(74) Vertreter: Schurack, Eduard F.

(56) Entgegenhaltungen:
- US-A1- 2002 156 886
- US-A1- 2003 135 612

## Beschreibung

Die vorliegende Erfindung betrifft ein Verfahren zur Konfiguration einer Filtervorrichtung für einen in Frames organisierten Datenstrom in einem Protokolltester sowie einen entsprechenden Protokolltester.

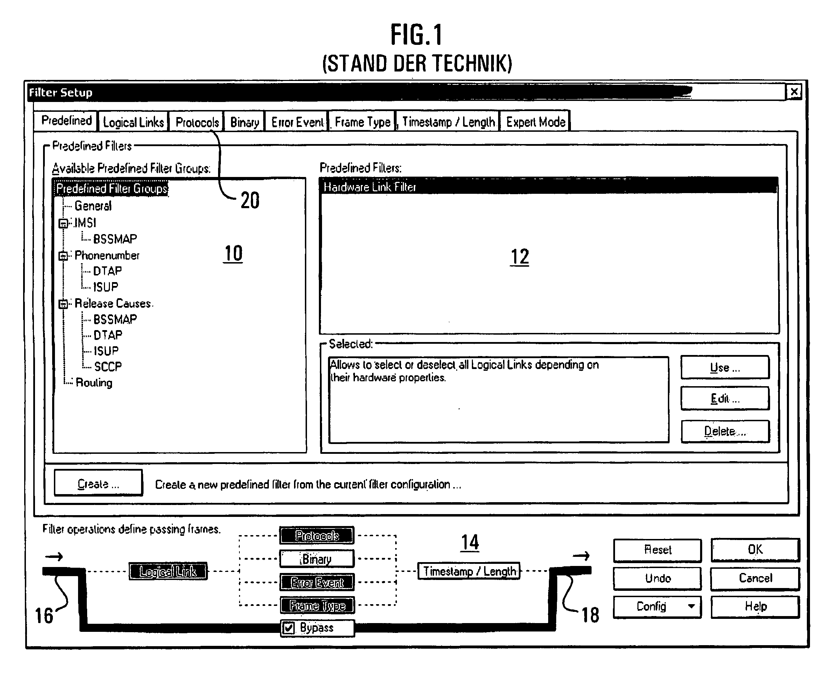

Zum besseren Verständnis der der Erfindung zugrunde liegenden Problematik wird zunächst ein aus dem Stand der Technik bekanntes Verfahren zur Konfiguration einer Filtervorrichtung für einen in Frames organisierten Datenstrom in einem Protokolltester mit Bezug auf die Figuren 1 bis 7 näher erläutert.

Bekanntlich wird bei Protokolltestem eine große Menge an Daten aufgezeichnet. Bei den großen Datenmengen ist es für eine sinnvolle Auswertung notwendig durch verschiedenartige Filter die auf einem Monitor einer Bedienperson anzuzeigende Datenmenge zu reduzieren.

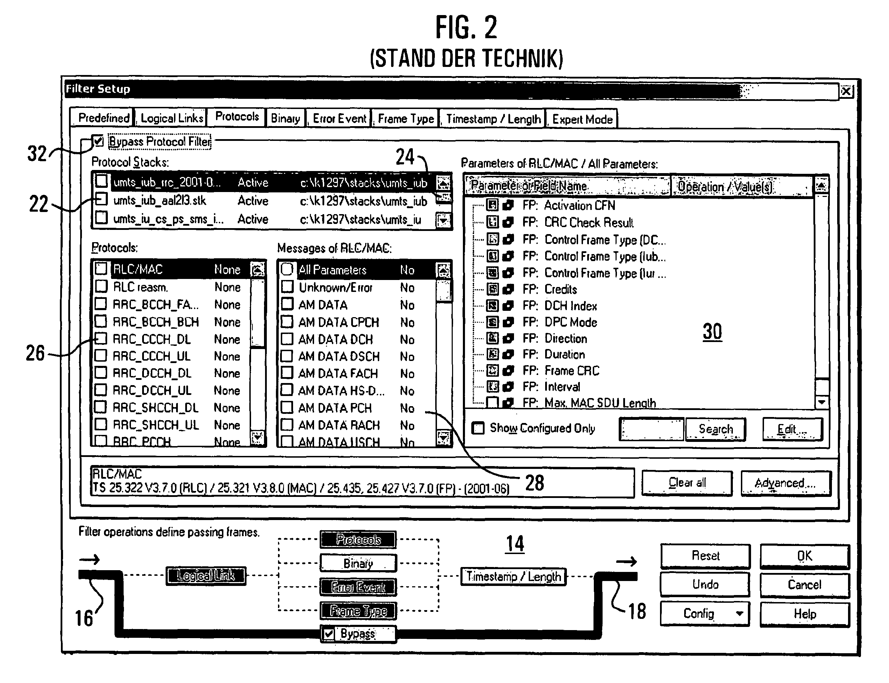

Figur 1 zeigt eine grafische Benutzeroberfläche einer Anzeigeeinheit, beispielsweise eines Computerbildschirms, mit mehreren Fenstern und mehreren Icons, mit denen, wie beispielsweise von Windows-Anwenderprogrammen her bekannt, Auswahlen getroffen und Funktionen ausgelöst werden können. In Figur 1 sind zunächst in einem Fenster 10 vordefinierte Filtergruppen angegeben, in einem Fenster 12 die zugehörigen Filter und in einem Fenster 14 zur Verdeutlichung die Wahl der Filterart, mit der ein Datenstrom zwischen einer Datenquelle 16 und einer Datensenke 18 gefiltert wird. Die Datenquelle 16 kann mehrere einzelne Datenquellen umfassen, wobei die Ausgangsdaten der einzelnen Datenquellen zu einem seriellen Datenstrom zusammengesetzt werden, der dann die Filtervorrichtung durchläuft. Der Deutlichkeit halber werden im Folgenden nur die Merkmale der aus dem Stand der Technik bekannten Vorrichtung zur Konfiguration einer Filtervorrichtung näher erläutert, die im Hinblick auf die Erfindung von Belang sind. Durch Betätigen des Icons 20 zur Konfiguration von Protokollfiltern geht die Anzeige von Figur 1 über in die Anzeige von Figur 2. Im Fenster 22 von Figur 2 sind verschiedene konfigurierte Protokollstacks angezeigt. Ein Scrollbalken 24 ermöglicht die Anzeige weiterer konfigurierter Protokollstacks. Im Fenster 26 werden zu dem im Fenster 22 markierten Protokollstack zugehörige Protokolle angezeigt. Im Fenster 28 werden Nachrichten (Messages) angezeigt, die zu dem im Fenster 26 markierten Protokoll gehören. Im Fenster 30 sind die Parameter oder Feldnamen angegeben, die zu der im Fenster 28 markierten Nachricht gehören.

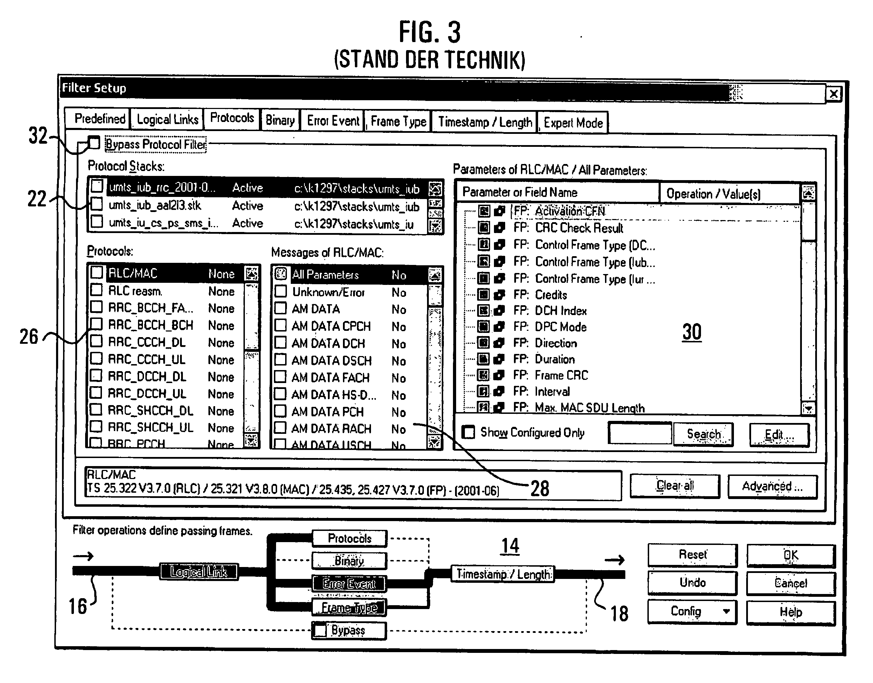

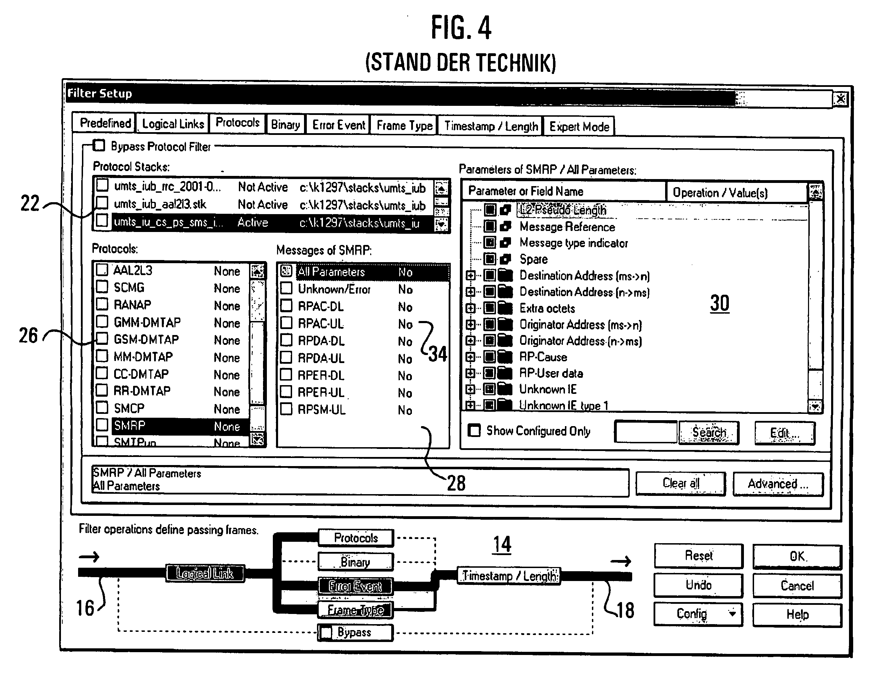

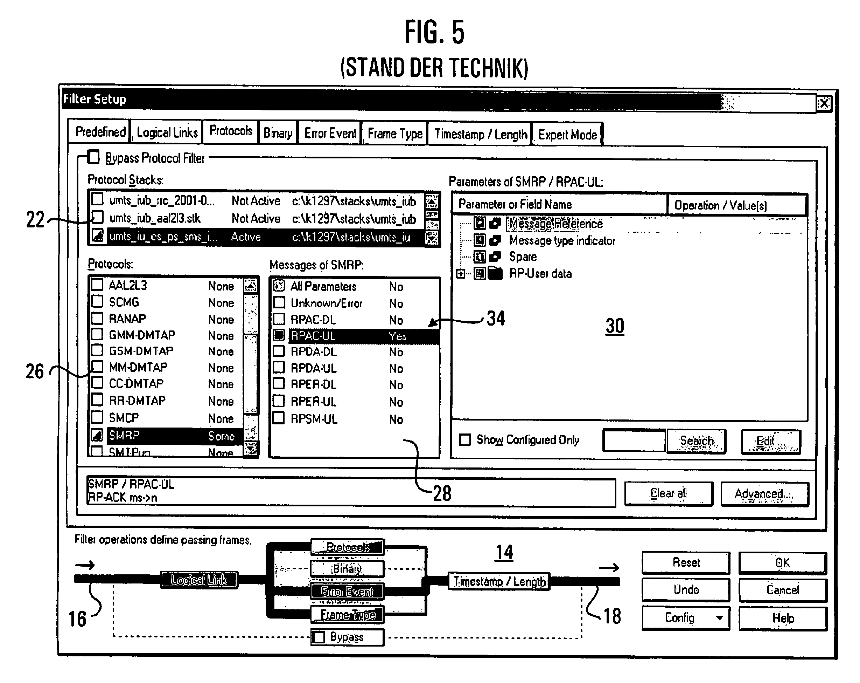

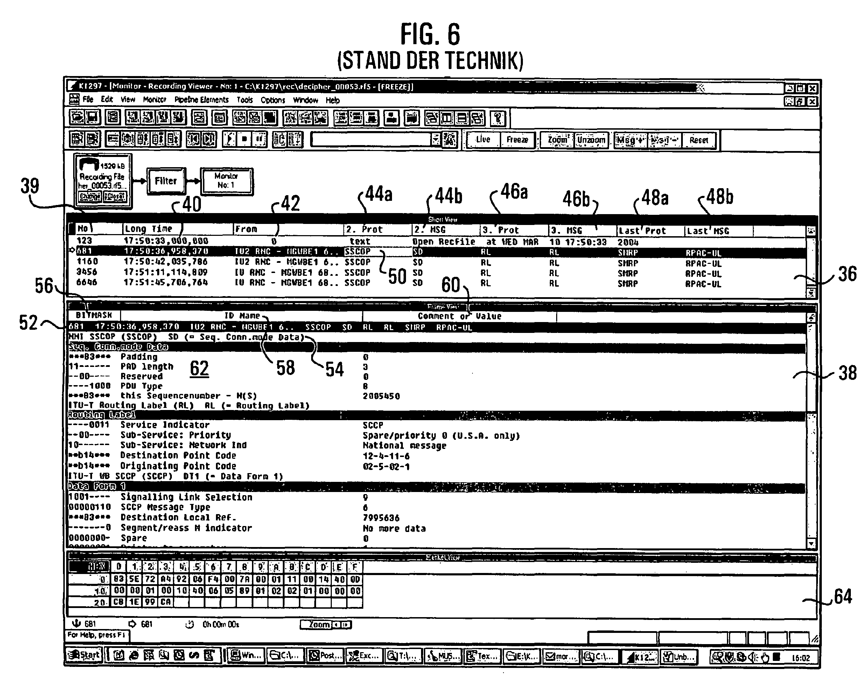

Durch Anklicken des Icons 32 von Figur 2 wird das entsprechende Filter enabled, d. h. die Darstellung geht über in die Darstellung von Figur 3. Wie Fenster 14 von Abbildung 3 zu entnehmen ist, läuft der Datenstrom nunmehr durch die Filtervorrichtung. Die Aufgabe der Bedienperson besteht vorliegend beispielhaft darin, aus dem Datenstrom die Frames herauszufischen, die die Message RPAC-UL enthalten. Hierfür muss sie nun ihre Filtervorrichtung konfigurieren. Wie ohne weiteres ersichtlich, ist hierfür beachtliches Expertenwissen nötig: Die Bedienperson muss erstens wissen, in welchem Protokoll diese Nachricht vorkommt und muss zweitens wissen, in welchem Protokollstack das entsprechende Protokoll zu finden ist. Ein geübter Benutzer wird eine bestimmte Vorstellung haben, wo er zu suchen hat. Ein ungeübter Benutzer ist darauf angewiesen, bei einer Suche auf gut Glück oder systematisch alle Protokollstacks und Protokolle durchzuprobieren, bis ihm die entsprechende Message im Fenster angezeigt wird. Mit Glück, Sachverstand oder Geduld wird der Benutzer schließlich die in Figur 4 dargestellte Ansicht erhalten, wonach er die Nachricht RPAC-UL 34 im Fenster 28 als Bestandteil des Protokolls SMRP ist, siehe Fenster 26, welches Bestandteil des Protokollstacks umts_iu_cs_ps_sms_1... ist, siehe Fenster 22, gefunden hat. Durch Markieren von RPAC-UL im Fenster 28, siehe Figur 5, wird die Filtervorrichtung entsprechend konfiguriert und der von der Datenquelle 16 ausgehende Datenstrom entsprechend gefiltert. Das Ergebnis der Filterung kann Figur 6 entnommen werden: In Figur 6 sind im Fenster 36, einer sogenannten short-view, die Frames angezeigt, die die Message RPAC-UL aufweisen. Die short-view 36 weist mehrere Spalten auf: In der Spalte 39 sind die laufenden Nummern der Frames angegeben. Die Spalte 40 gibt den dem jeweiligen Frame zugeordneten Zeitstempel wieder. Die Spalte 42 gibt die Datenquelle wieder. Die folgenden Spalten 44a, b, 46a, b, 48a, b, geben in geordneter Weise die im jeweiligen Frame enthaltenen Protokolle und die zugehörigen Nachrichten wieder. Vorliegend wurde im Fenster 36 der Frame mit der laufenden Nummer 681 markiert. Der Inhalt dieses Frames ist protokollweise sortiert in voll ausdekodierter Form im Fenster 38, der sogenannten frame-view, wiedergegeben. Den Fenstern zugewiesene Scrollbalken ermöglichen die Anzeige gegenwärtig nicht angezeigter Informationen. Im Fenster 36 wurde im Frame 681 das zweite Protokoll SSCOP, siehe Spalte 44a, markiert, siehe Bezugszeichen 50, im Fenster 38 ist der Frame 681, siehe Bezugszeichen 52, beginnend mit dem Protokoll SSCOP, siehe Bezugszeichen 54, in voll ausdekodierter Weise dargestellt. Eine erste Spalte 56 gibt die Bitmaske wieder, eine zweite Spalte 58 den Namen der Protokolldateneinheit und eine dritte Spalte 60 einen entsprechenden zugehörigen Kommentar oder Wert. Im ersten Abschnitt 62 sind die Protokolldateneinheiten der Message SD, siehe Spalte 44b, angegeben. Entsprechendes gilt für die anderen Protokolle und anderen Nachrichten. In einem dritten Fenster 64 ist der im ersten Fenster 36 markierte Frame in hexadezimaler Weise angegeben. Wie Figur 6 entnommen werden kann, wurden durch Filterung eines Datenpakets mit 1529 kB Inhalt fünf Frames ausgewählt.

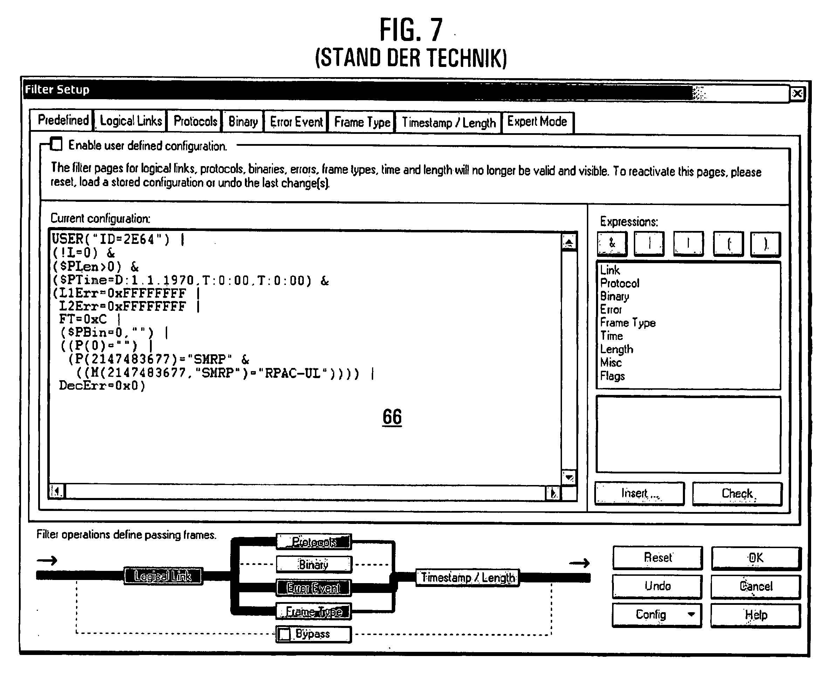

Figur 7 zeigt die in einem Fenster 66 die relevanten Daten zur Konfiguration der Filtervorrichtung zur Anzeige des Ergebnisses gemäß Figur 6. Diese Information kann beispielsweise abgespeichert werden und der Bedienperson als vordefiniertes (predefined) Filter zur Auswahl angeboten werden.

In diesem Zusammenhang sei auf die US 2003/0135612 A1 verwiesen, die zwei unterschiedliche Systeme und Verfahren zur Konfiguration einer Filtervorrichtung für einen in Frames organisierten Datenstrom offenbart. Bei dem einen Verfahren können Filtervorschriften direkt in eine grafische Benutzerschnittstelle eingegeben und verändert werden. Bei dem anderen Verfahren können Filtervorschriften anhand einer Darstellung von Datenpaketen in ausdekodierter Form festgelegt werden. Der Benutzer wählt entweder ein dekodiertes protokollspezifisches Feld oder ein unaufbereitetes hexadezimales oder ein Textfeld aus, und wählt dann aus einem lokalen Menü den Punkt "Filtern" aus. Wenn die resultierende Filtervorschrift auf die Darstellung der ausdekodierten Datenpakete angewendet wird, behält jedes Datenpaket seine Paketnummer, aber es werden nur die gefilterten Pakete angezeigt. Diese Druckschrift offenbart außerdem eine Anzeige zur Präsentation von Web-Sitzungen für einen Benutzer. Diese Anzeige weist mehrere Fenster auf, wobei in einem Fester Datenpakete eines Knotens oder einer Sitzung angezeigt werden. In einem weiteren Fenster wird ein von einem Benutzer ausgewähltes Datenpaket in ausdekodierter Form dargestellt, während ein letztes Fenster das ausgewählte Datenpaket in hexadezimaler Schreibweise zeigt.

Gemäß einem ersten Aspekt der vorliegenden Erfindung wird ein Verfahren zur Konfiguration einer Filtervorrichtung für einen in Frames organisierten Datenstrom in einem Protokolltester mit den im Anspruch 1 enthaltenen Schritten zur Verfügung gestellt. Gemäß einem zweiten Aspekt der Erfindung wird ferner ein Protokolltester gemäß Anspruch 18 bereitgestellt.

Ein Benutzer kann ohne Kenntnisse des internen Protokollaufbaus einen Filter auf einen Datenstrom auf einfache Art und Weise konfigurieren, wenn ihm in einem Fenster die Frames zusammen mit Inhalten des Frames angezeigt werden, wobei der Benutzer durch Markieren, d. h. Anklicken, eines Inhalts den entsprechenden Inhalt als Filterfunktion definieren und auf den Datenstrom anwenden kann. Dadurch, dass im Protokolltester Mittel vorgesehen sind, die eine Teildekodierung des Inhalts des jeweiligen Frames vornehmen, braucht dieses Wissen nicht beim Benutzer vorhanden sein, vielmehr genügt die Hinterlegung im Protokolltester. In der vorliegenden Erfindung werden dem Benutzer die im jeweiligen Frame enthaltenen Protokolle und Nachrichten auf dem Bildschirm angezeigt. Eine detaillierte Kenntnis des Aufbaus des Protokollstacks und der darin enthaltenen Protokolle ist nicht nötig. Dadurch, dass erfindungsgemäß diejenigen Inhalte mit einem Fehleridentifikationsmerkmal gekennzeichnet werden, bei deren Dekodierung ein Fehler aufgetreten ist, wird das Augenmerk des Benutzers sofort auf die kritischen Nachrichteninhalte gelenkt.

Als Inhalt der Frames werden bevorzugt die im jeweiligen Frame verwendeten Protokolle und/oder Nachrichten und/oder Protokolldateneinheiten und/oder Werte von Protokolldateneinheiten angezeigt. Es ist weiter bevorzugt, dass die auf der Anzeigeeinheit in Abhängigkeit der Filtervorschrift dargestellten Frames in einem weiteren Fenster dargestellt werden. Das weitere Fenster, in dem die Frames in Abhängigkeit der Filtervorschrift angezeigt werden, kann gleich dem ersten Fenster sein oder ein zusätzliches Fenster. Wenn das zweite Fenster gleich dem ersten Fenster ist, ergibt sich eine erhöhte Übersichtlichkeit und es wird in einfacher Weise die Möglichkeit bereitgestellt, auf die nunmehr reduzierte Anzahl von Frames eine weitere Filtervorschrift zu kreieren und anzuwenden.

Durch die Bereitstellung der Möglichkeit des Negierens kann ausgewählt werden, ob die Filtervorschrift zur Darstellung von Frames in dem zweiten Fenster führt, die den markierten Inhalt aufweisen oder gerade nicht aufweisen.

Für eine besonders präzise Filterung ist es weiterhin bevorzugt, wenn der in Schritt b) des erfindungsgemäßen Verfahrens markierte Frame in ausdekodierter Form, insbesondere in voll ausdekodierter Form, dargestellt wird.

Es ist weiterhin bevorzugt, wenn in einem weiteren Fenster der Anzeigeeinheit der markierte Frame in hexadezimaler Schreibweise dargestellt wird. Im Sinne der vorliegenden Erfindung schließt die Bezeichnung "weiteres Fenster" die gleichzeitige Darstellung mehrerer Fenster auf der Anzeigeeinheit sowie die sequentielle Darstellung mehrerer Fenster auf der Anzeigeeinheit ein.

Generell ist die Bereitstellung von Mitteln zum Scrollen vorteilhaft, insbesondere für den Fall, dass nicht alle Frames oder Inhalte eines Frames in dem jeweiligen Fenster darstellbar sind. Damit wird die Übersichtlichkeit der Anzeige deutlich erhöht.

Zur weiteren Verfeinerung der Filtervorschrift ist es besonders bevorzugt, dass die in Abhängigkeit der Filtervorschrift dargestellten Frames in einem weiteren Fenster in ausdekodierter Form, insbesondere in voll ausdekodierter Form, dargestellt werden. Durch Bereitstellung der Möglichkeit zur Ableitung einer weiteren Filtervorschrift durch Markieren einer bestimmten Protokolldateneinheit oder eines bestimmten Werts einer Protokolldateneinheit wird eine besonders effektive Filterung des Datenstroms ermöglicht. Insbesondere in dieser Ausprägung der Erfindung wird offensichtlich, welches immense Wissen, das im Stand der Technik beim Benutzer vorhanden sein musste, um eine gewünschte Filtervorschrift zu kreieren, nunmehr von einem erfindungsgemäßen Protokolltester bereitgestellt wird.

Um dem Benutzer eine Übersicht zu verschaffen, wozu die von ihm markierte Protokolldateneinheit oder der Wert der Protokolldateneinheit gehört, ist es bevorzugt, wenn in einem weiteren Fenster der zu der markierten Protokolldateneinheit oder zu dem bestimmten Wert der Protokolldateneinheit zugehörige Protokollstack und/oder das zugehörige Protokoll und/oder die zugehörige Nachricht und/oder der zugehörige Parameter und/oder der zugehörige Feldname angezeigt werden. Damit wird gleichermaßen der umgekehrte Weg beschritten wie beim Stand der Technik: Wonach beim Stand der Technik die Zugehörigkeit des zur Definition der Filterung zu verwendenden Elements bekannt sein musste, zeigt jetzt umgekehrt nach Definition der Filtervorschrift ein erfindungsgemäßer Protokolltester diese Zugehörigkeit an.

Eine besonders effektive Filterung wird ermöglicht, wenn eine Möglichkeit zum Modifizieren des markierten Inhalts des markierten Frames zur Ableitung einer Filtervorschrift bereitgestellt wird. Insbesondere durch die Verwendung sogenannter Wildcards oder durch Anzeige eines Sollbereichs eines Werts lassen sich dadurch auf einfache Art und Weise hocheffektive Filtervorschriften kreieren.

Weiterhin ist bevorzugt, wenn durch Markieren eines mit einem Fehleridentifikationsmerkmal gekennzeichneten Inhalts eine Filtervorschrift ableitbar ist, die ein Filtern nach Frames ermöglicht, die sowohl den Inhalt als auch das Fehleridentifikationsmerkmal, das diesem Inhalt zugeordnet ist, aufweisen. Dadurch lässt sich auf einfache Weise nach Frames filtern, die genau diesen Fehler aufweisen.

Selbstverständlich ist es möglich, entsprechend abgeleitete Filtervorschriften als vordefinierte Filtervorschriften in einem erfindungsgemäßen Protokolltester zu speichern, um sie in zukünftigen Anwendungen wieder zu verwenden.

Es ist für den Fachmann offensichtlich, dass zur Ausführung der entsprechenden Verfahrensschritte entsprechende Mittel vorgesehen werden müssen, insbesondere durch Erstellung entsprechender Programme.

Die im Zusammenhang mit dem erfindungsgemäßen Verfahren beschriebenen bevorzugten Ausführungsformen und Vorteile gelten, soweit anwendbar auch für den erfindungsgemäßen Protokolltester.

Weitere vorteilhafte Ausführungsformen ergeben sich aus den Unteransprüchen.

Im Nachfolgenden wird nunmehr ein Ausführungsbeispiel der Erfindung unter Bezugnahme auf die beigefügten Zeichnungen näher beschrieben. Es zeigen:
- Figur 1: eine erste grafische Benutzeroberfläche eines aus dem Stand der Technik bekannten Verfahrens zur Konfiguration einer Filtervorrichtung;
- Figur 2: eine zweite grafische Benutzeroberfläche eines aus dem Stand der Technik bekannten Verfahrens zur Konfiguration einer Filtervorrichtung;
- Figur 3: eine dritte grafische Benutzeroberfläche eines aus dem Stand der Technik bekannten Verfahrens zur Konfiguration einer Filtervorrichtung;
- Figur 4: eine vierte grafische Benutzeroberfläche eines aus dem Stand der Technik bekannten Verfahrens zur Konfiguration einer Filtervorrichtung;
- Figur 5: eine fünfte grafische Benutzeroberfläche eines aus dem Stand der Technik bekannten Verfahrens zur Konfiguration einer Filtervorrichtung;
- Figur 6: eine sechste grafische Benutzeroberfläche eines aus dem Stand der Technik bekannten Verfahrens zur Konfiguration einer Filtervorrichtung;
- Figur 7: eine siebente grafische Benutzeroberfläche eines aus dem Stand der Technik bekannten Verfahrens zur Konfiguration einer Filtervorrichtung;
- Figur 8: eine erste grafische Benutzeroberfläche eines erfindungsgemäßen Verfahrens zur Konfiguration einer Filtervorrichtung;
- Figur 9: eine zweite grafische Benutzeroberfläche eines erfindungsgemäßen Verfahrens zur Konfiguration einer Filtervorrichtung;
- Figur 10: eine dritte grafische Benutzeroberfläche eines erfindungsgemäßen Verfahrens zur Konfiguration einer Filtervorrichtung;
- Figur 11: eine vierte grafische Benutzeroberfläche eines erfindungsgemäßen Verfahrens zur Konfiguration einer Filtervorrichtung;
- Figur 12: eine fünfte grafische Benutzeroberfläche eines erfindungsgemäßen Verfahrens zur Konfiguration einer Filtervorrichtung; und
- Figur 13: einen Signalflussplan einer Ausführungsform des erfindungsgemäßen Verfahrens.

Für gleiche und gleichartige Elemente werden im Nachfolgenden gleiche Bezugszeichen verwendet.

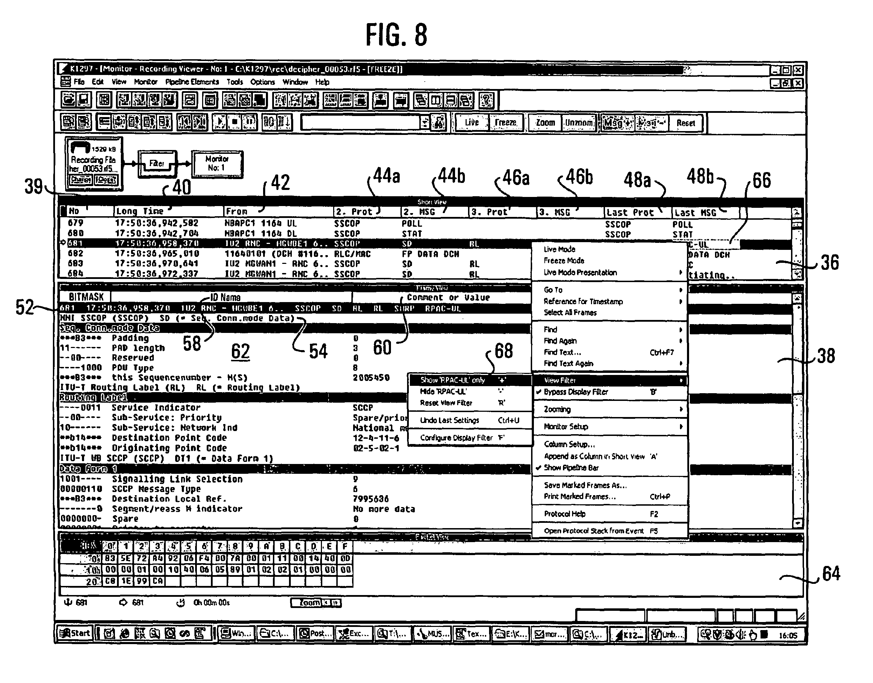

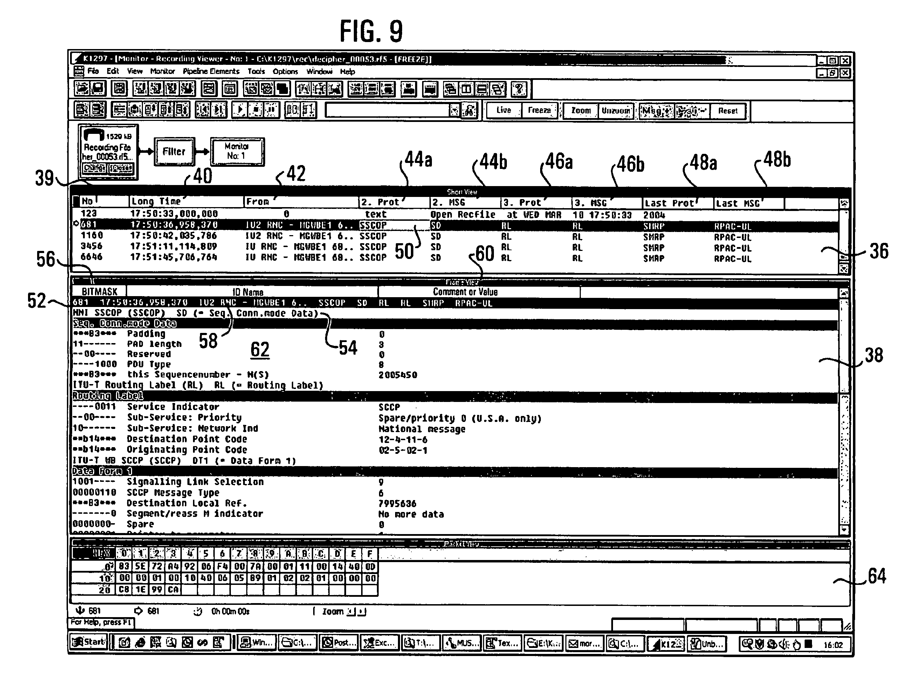

Die in Figur 8 dargestellte grafische Benutzeroberfläche entspricht vom Aufbau her im Wesentlichen derjenigen von Figur 6, mit dem Unterschied, dass es sich bei Figur 6 um die Darstellung des Ergebnisses einer Filterung bei dem aus dem Stand der Technik bekannten Verfahren handelt, während Figur 8 den Einstieg zur Konfiguration einer Filtervorrichtung bei dem erfindungsgemäßen Verfahren darstellt. Dies wird offensichtlich bei Betrachtung des Fensters 36, bei dem die Frames, siehe Spalte 39, noch alle vorhanden sind, siehe die fortlaufende Nummerierung, d. h. noch keiner Filterung unterzogen wurden. Das Fenster 38 zeigt wiederum den im Fenster 36 markierten Frame in voll ausdekodierter Form, vorliegend den Frame mit der Nummer 681. Innerhalb des Fensters 36 im Frame 681 ist die Zelle 66, d. h. die Nachricht "RPAC-UL" markiert. Eine entsprechende Anzeige ist im Fenster 68 zu sehen. Die Anordnung der Protokolle und Nachrichten im Fenster 36 erstreckt sich von den niedrigsten Protokollen links bis zu den höchsten Protokollen im OSI-Modell rechts. Durch Klicken auf das Fenster 68 wird die entsprechenden Filterung ausgelöst und man erhält die Anzeige gemäß Figur 9. Diese entspricht der Anzeige von Figur 6 und führt in diesem direkten Vergleich deutlich die Vorteile des erfindungsgemäßen Verfahrens vor Augen.

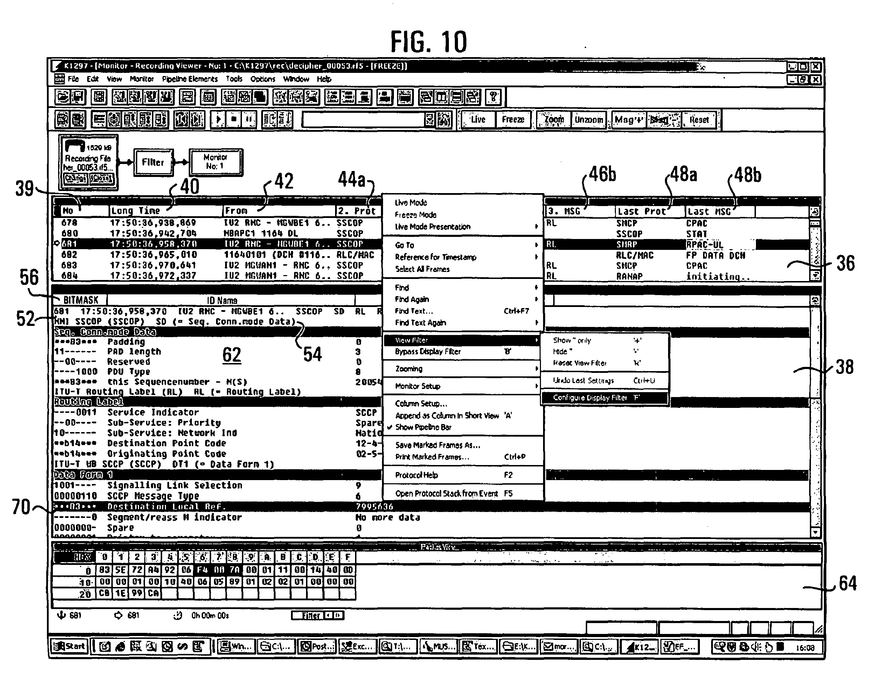

Figur 10 verdeutlicht, dass nicht nur der im Fenster 36 dargestellte Inhalt der Frames zur Ableitung einer Filtervorschrift verwendet werden kann, sondern auch der im Fenster 38 in voll ausdekodierter Form dargestellte Inhalt des Frames, vorliegend des Frames mit der Nummer 681. Durch Anklicken der Zeile 70 lässt sich eine Filtervorschrift ableiten, wobei es dem Benutzer überlassen bleibt, den angegebenen Wert für den Parameter "Destination Local Ref." beispielsweise durch Verwendung von Wildcards oder durch Definition eines gewünschten Sollbereichs zu modifizieren. Im Fenster 64, d. h. in der hexadezimalen Darstellung, sind die zu dem entsprechenden Parameter gehörenden Bytes markiert. Es bleiben demnach zwei übergeordnete Varianten zur Definition einer Filtervorschrift zu unterscheiden: Bei der ersten Variante wird mit Bezug auf Figur 6 im Fenster 36 ein Inhalt eines Frames zur Definition einer Filtervorschrift herangezogen, wobei anschließend, siehe Figur 9, durch Wählen des Inhalts im Fenster 38 eine weitere Filtervorschrift abgeleitet werden kann. Die andere Variante besteht darin, ausgehend von der Darstellung in Figur 10, bereits im ersten Schritt einen im Fenster 38 dargestellten Inhalt zur Definition einer Filtervorschrift heranzuziehen.

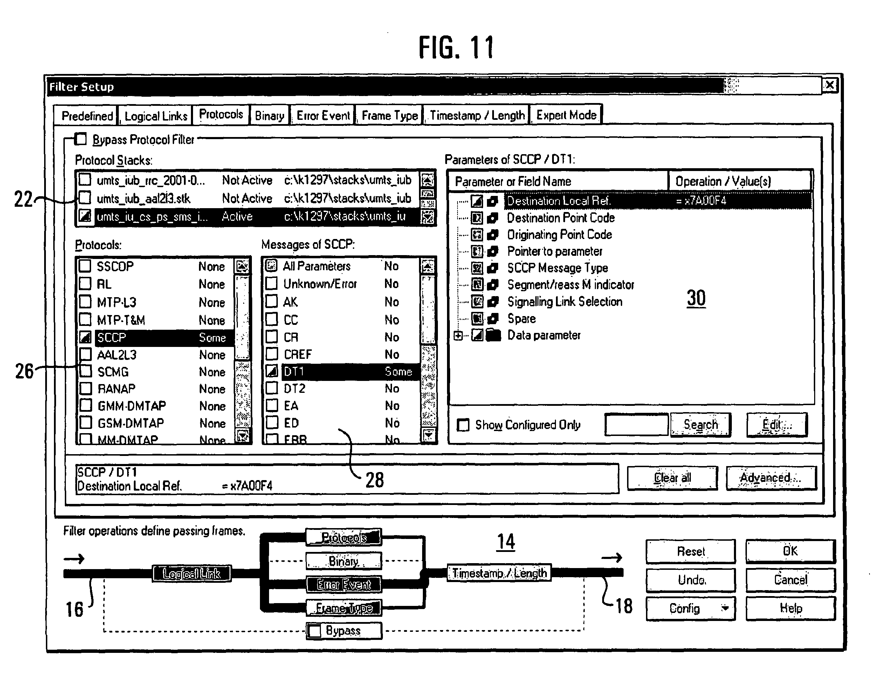

Die Darstellung von Figur 11 zeigt die Zugehörigkeit des in Zeile 70 von Figur 10 ausgewählten Parameters, nämlich zum Protokollstack umts_iu_cs_ps_sms_i..., siehe Fenster 22 von Figur 11, zum Protokoll SCCP, siehe Fenster 26 von Figur 11, zur Nachricht DT1, siehe Fenster 28 von Figur 11. Der Parameter ist in Fenster 30 angegeben, wo er zur Definition einer Filtervorschrift modifiziert werden kann, beispielsweise durch Wildcards, durch Verwendung von Größer-Gleich-, Kleiner-Gleich-, Ungleich-Zeichen usw.

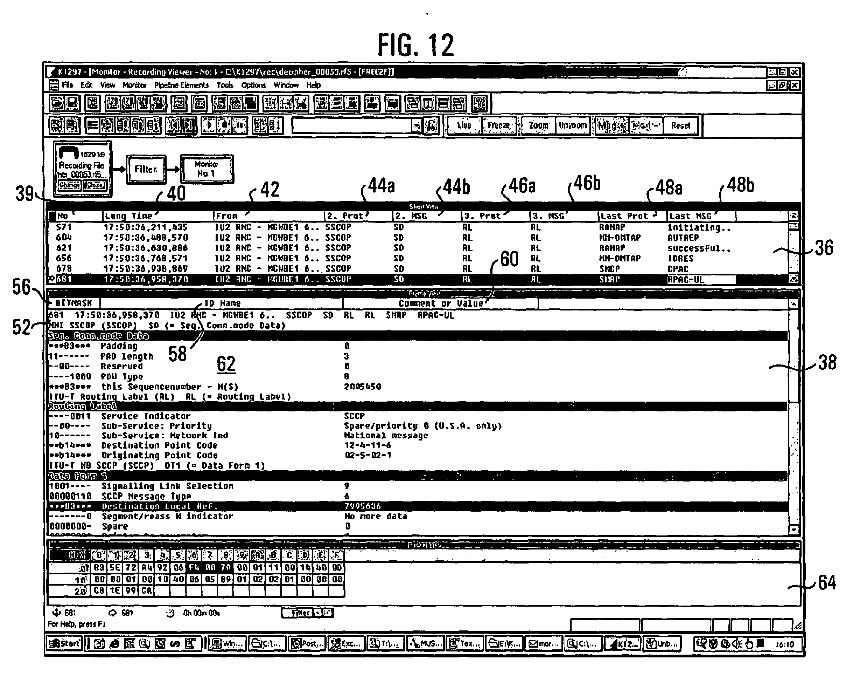

Figur 12 zeigt das zugehörige Filterergebnis, d. h. im Fenster 36 sind die Rahmen angegeben, die die in Figur 11 definierte Filtervorschrift erfüllen.

In einer nicht dargestellten Ausführungsform werden Inhalte eines Frames, bei dem sich Dekodierfehler ergeben haben, optisch für den Benutzer gekennzeichnet. Durch Markieren eines entsprechenden Inhalts eines Frames kann nach Frames gesucht werden, die diesen Inhalt ebenfalls in fehlerhafter Form aufweisen.

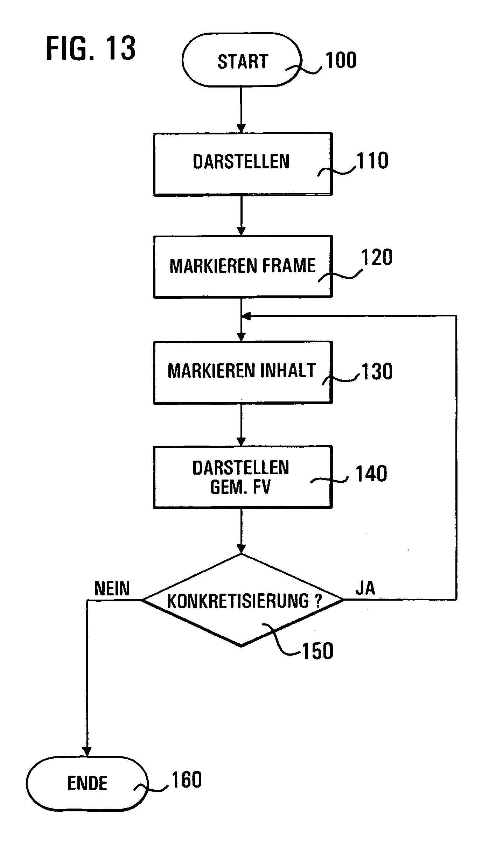

Figur 13 zeigt einen Signalflussplan einer Ausführungsform des erfindungsgemäßen Verfahrens, welches in Schritt 100 beginnt. In Schritt 110 wird auf einer Anzeigeeinheit eine Übersicht über Frames des Datenstroms dargestellt, wobei jeweils für einen Frame ein Identifizierungsmerkmal des Frames sowie mindestens ein Inhalt des Frames angezeigt werden. In Schritt 120 wird ein bestimmter Frame markiert und in Schritt 130 wird ein bestimmter Inhalt des markierten Frames zur Ableitung einer Filtervorschrift markiert. Anschließend werden in Schritt 140 auf einer Anzeigeeinheit Frames in Abhängigkeit der Filtervorschrift dargestellt. In Schritt 150 kann sich der Benutzer entscheiden, ob er eine weitere Konkretisierung der Filtervorschrift wünscht oder nicht. Im positiven Fall wird das Verfahren zurückgeleitet zu Schritt 130, wo dem Benutzer Gelegenheit gegeben wird, einen weiteren Inhalt eines Frames zu markieren und daraus eine Filtervorschrift abzuleiten. Im negativen Fall wird das Verfahren in Schritt 160 beendet.

## Patentansprüche

1. Verfahren zur Konfiguration einer Filtervorrichtung für einen in Frames organisierten Datenstrom in einem Protokolltester folgende Schritte umfassend:
a) Darstellen auf einer Anzeigeeinheit eine Übersicht über Frames des Datenstroms, wobei jeweils für einen Frame ein Identifizierungsmerkmal des Frames sowie mindestens ein Inhalt des Frames angezeigt werden;
b) Markieren eines bestimmten Frames;
c) Darstellen des markierten Frames in ausdekodierter From, wobei diejenigen Inhalte des Frames, bei deren Dekodierung ein Fehler aufgetreten ist, mit einem Fehleridentifikationsmerkmal gekennzeichnet werden; und dass durch Markieren eines mit einem Fehleridentifikationsmerkmal gekennzeichneten Inhalts eine Filtervorschrift abgeleitet wird, die ein Filtern nach Frames ermöglicht, die sowohl den Inhalt als auch das Fehleridentifikationsmerkmal, das diesem Inhalt zugeordnet ist, aufweisen;
d) Markieren eines bestimmen Inhalts des Frames zur Ableitung einer Filtervorschrift;
e) Darstellen auf der Anzeigeeinheit von Frames in Abhängigkeit der Filtervorschrift.

2. Verfahren nach Anspruch 1,
**dadurch gekennzeichnet,**
**dass** als Inhalt der Frames die in dem jeweiligen Frame verwendeten Protokolle und/oder Nachrichten und/oder Protokolldateneinheiten und/oder Werte von Protokolldateneinheiten angezeigt werden.

3. Verfahren nach Anspruch 1 oder 2,
**dadurch gekennzeichnet,**
**dass** die auf der Anzeigeeinheit in Abhängigkeit der Filtervorschrift dargestellten Frames in einem weiteren Fenster dargestellt werden.

4. Verfahren nach einem der Ansprüche 1 bis 3,
**dadurch gekennzeichnet,**
**dass** die Filtervorschrift zur Darstellung von Frames führt, die den markierten Inhalt aufweisen.

5. Verfahren nach einem der Ansprüche 1 bis 3,
**dadurch gekennzeichnet,**
**dass** die Filtervorschrift zur Darstellung von Frames führt, die den markierten Inhalt nicht aufweisen.

6. Verfahren nach einem der vorhergehenden Ansprüche,
**dadurch gekennzeichnet,**
**dass** der in Schritt b) markierte Frame in voll ausdekodierter Form dargestellt wird.

7. Verfahren nach einem der vorhergehenden Ansprüche,
**gekennzeichnet durch** folgenden weiteren Schritt:
f) Darstellen des markierten Frames in hexadezimaler Schreibweise in einem weiteren Fenster (64) der Anzeigeeinheit.

8. Verfahren nach einem der vorhergehenden Ansprüche,
**gekennzeichnet durch** folgenden weiteren Schritt:
Bereitstellen von Mitteln zum Scrollen für den Fall, dass nicht alle Frames oder Inhalte eines Frames in dem jeweiligen Fenster darstellbar sind.

9. Verfahren nach einem der vorhergehenden Ansprüche,
**dadurch gekennzeichnet,**
**dass** die in Abhängigkeit der Filtervorschrift dargestellten Frames in einem weiteren Fenster (38) in ausdekodierter Form, insbesondere in voll ausdekodierter Form, dargestellt werden.

10. Verfahren nach Anspruch 9,
**gekennzeichnet durch** folgenden weiteren Schritt:
g) Markieren einer bestimmten Protokolldateneinheit oder eines bestimmten Werts einer Protokolldateneinheit zur Ableitung einer weiteren Filtervorschrift.

11. Verfahren nach Anspruch 10,
**gekennzeichnet durch** folgenden weiteren Schritt:
h) Darstellen auf der Anzeigeeinheit von Frames in Abhängigkeit der weiteren Filtervorschrift.

12. Verfahren nach einem der vorhergehenden Ansprüche,
**gekennzeichnet durch** folgenden weiteren Schritt:
i) Darstellen auf der Anzeigeeinheit des zur markierten Protokolldateneinheit oder zu dem bestimmten Wert der Protokolldateneinheit zugehörigen Protokollstacks und/oder des zugehörigen Protokolls und/oder der zugehörigen Nachricht und/oder des zugehörigen Parameters und/oder des zugehörigen Feldnamens.

13. Verfahren nach einem der vorhergehenden Ansprüche,
**gekennzeichnet durch** folgenden weiteren Schritt:
j) Bereitstellen einer Möglichkeit zum Modifizieren des markierten Inhalts des markierten Frames zur Ableitung einer Filtervorschrift.

14. Verfahren nach Anspruch 13,
**gekennzeichnet durch** folgenden weiteren Schritt:
k) Bereitstellen des Mittels von Wildcards zum Modifizieren des Inhalts oder eines Mittels zur Angabe eines Sollbereichs zur Ableitung einer Filtervorschrift.

15. Verfahren nach einem der vorhergehenden Ansprüche,
**dadurch gekennzeichnet,**
**dass** mehrere abgeleitete Filtervorschriften seriell auf einen Datenstrom angewendet werden.

16. Verfahren nach einem der vorhergehenden Ansprüche,
**dadurch gekennzeichnet,**
**dass** die abgeleitete Filtervorschrift negiert wird.

17. Protokolltester zur Durchführung eines Verfahrens nach einem der Ansprüche 1 bis 16 mit
einer Filtervorrichtung zum Filtern eines in Frames organisierten Datenstroms;
Mitteln zum Dekodieren des Inhaltes eines Frames;
einer Anzeigeeinheit
- zum Darstellen eines Frames in ausdekodierter Form und
- zum Darstellen von Frames in Abhängigkeit der Filtervorschrift; und
Mitteln zum Markieren von vom Benutzer ausgewählten auf der Anzeigeeinheit dargestellten Elementen;
**dadurch gekennzeichnet,**
**dass** die Anzeigeeinheit ferner dazu ausgebildet ist, eine Übersicht über Frames des Datenstroms darzustellen, wobei jeweils für einen Frame ein Identifizierungsmerkmal des Frames sowie mindestens ein Inhalt des Frames angezeigt werden; und
diejenigen Inhalte des Frames, bei deren Dekodierung ein Fehler aufgetreten ist, mit einem Fehleridentifikationsmerkmal zu kennzeichnen.

## Claims

1. Method for the configuration of a filter device for a data stream organised in frames in a protocol tester, comprising the following steps:
a) showing of an overview of frames of the data stream on a display unit, whereby there is shown for each frame one identification feature of the frame and at least one content of the frame;
b) highlighting of a specific frame;
c) showing of the highlighted frame in decoded format, wherein those contents of the frame, during the decoding of which an error has occurred, are marked with an error identification feature; and that through highlighting a content marked with an error identification feature a filter rule is derived which allows a filtering by frames having both the content as well as the error identification feature assigned to this content;
d) highlighting of a certain content of the frame for deriving a filter rule;
e) showing of frames on the display unit as a function of the filter rule.

2. Method according to claim 1,
**characterised in that**
the protocols and/or messages and/or protocol data units and/or values of protocol data units used in the relevant frame are shown as the frame content.

3. Method according to claims 1 or 2,
**characterised in that**
the frames shown on the display unit as a function of the filter rule are shown in a further window.

4. Method according to one of claims 1 to 3,
**characterised in that**
the filter rule leads to the display of frames exhibiting the highlighted content.

5. Method according to one of claims 1 to 3,
**characterised in that**
the filter rule leads to the display of frames not exhibiting the highlighted content.

6. Method according to one of the above claims,
**characterised in that**
the frame highlighted in step b) is shown in a decoded format, especially in a fully decoded format.

7. Method according to one of the above claims,
**characterised by** the following further step:
f) presenting of the highlighted frame in a hexadecimal format in a further window (64) of the display unit.

8. Method according to one of the above claims,
**characterised by** the following further step:
providing of means for scrolling in case not all frames or contents of a frame can be shown in the relevant window.

9. Method according to one of the above claims,
**characterised in that**
the frames shown as a function of the filter rule are shown in a further window (38) in a decoded format, especially in a fully decoded format.

10. Method according to claim 9,
**characterised by** the following further step:
g) highlighting of a specific protocol data unit or a specific value of a protocol data unit to derive a further filter rule.

11. Method according to claim 10,
**characterised by** the following further step:
h) showing of frames on the display unit as a function of said further filter rule.

12. Method according to one of the above claims,
**characterised by** the following further step:
i) showing of the protocol stack and/or the associated protocol and/or the associated message and/or the associated parameter and/or the associated field name belonging to the highlighted protocol data unit or to the specific value of the protocol data unit on the display unit.

13. Method according to one of the above claims,
**characterised by** the following further step:
j) providing of a possibility to modify the highlighted content of the highlighted frame to derive a filter rule.

14. Method according to claim 13,
**characterised by** the following further step:
k) providing of the means of wild cards to modify the content, or a means for indicating a target range to derive a filter rule.

15. Method according to one of the above claims,
**characterised in that**
several derived filter rules are applied serially to a data stream.

16. Method according to one of the above claims,
**characterised in that**
the derived filter rule is negated.

17. Protocol tester to perform a method according to one of claims 1 to 16 comprising
a filter device for filtering a data stream organised in frames; means for decoding of the content of a frame;
a display unit
- for representing a frame in decoded form and
- for representing frames as a function of the filter rule; and
means for marking the elements shown on the display unit selected by the user;
**characterised in that**
the display unit further is designed to show an overview of the frames of the data stream, wherein for one frame an identification feature of the frame as well as at least one content of the frame are displayed; and
those contents of the frame, during the decoding of which an error has occurred, are marked with an error identification feature.

## Revendications

1. Procédé de configuration d'un dispositif de filtrage pour un flux de donnés comprenant des trames dans un testeur de protocole, qui comprend les étapes suivantes :
a) représentation sur une unité d'affichage d'un aperçu de trames du flux de données, un attribut d'identification de la trame ainsi qu'au moins un contenu de la trame étant chaque fois affichés pour une trame ;
b) marquage d'une trame précise ;
c) représentation de la trame marquée sous forme décodée, ceux des contenus de la trame au décodage desquels une erreur s'est produite étant désignés par un attribut d'identification d'erreur ; et une prescription de filtrage étant dérivée par le marquage d'un contenu désigné par un attribut d'identification d'erreur qui permet un filtrage par trames présentant tant le contenu que l'attribut d'identification d'erreur affecté à ce contenu ;
d) marquage d'un contenu précis de la trame pour dériver une prescription de filtrage ;
e) représentation par l'unité d'affichage de trames en fonction de la prescription de filtrage.

2. Procédé selon la revendication 1,
**caractérisé en ce que**
les protocoles et/ou messages et/ou unités de données de protocole et/ou valeurs d'unités de données de protocole utilisés dans la trame correspondante sont affichés en tant que contenu des trames.

3. Procédé selon la revendication 1 ou 2,
**caractérisé en ce que**
les trames représentées par l'unité d'affichage en fonction de la prescription de filtrage sont représentées dans une fenêtre supplémentaire.

4. Procédé selon l'une quelconque des revendications 1 à 3,
**caractérisé en ce que**
la prescription de filtrage conduit à l'affichage de trames qui présentent le contenu marqué.

5. Procédé selon l'une quelconque des revendications 1 à 3,
**caractérisé en ce que**
la prescription de filtrage conduit à l'affichage de trames qui ne présentent pas le contenu marqué.

6. Procédé selon l'une quelconque des revendications précédentes,
**caractérisé en ce que**
la trame marquée à l'étape b) est représentée sous sa forme intégralement décodée.

7. Procédé selon l'une quelconque des revendications précédentes,
**caractérisé par** l'étape supplémentaire suivante :
f) représentation en notation hexadécimale de la trame marquée, dans une fenêtre supplémentaire (64) de l'unité d'affichage.

8. Procédé selon l'une quelconque des revendications précédentes,
**caractérisé par** l'étape supplémentaire suivante :
mise à disposition de moyens de défilement dans le cas où la totalité des trames ou des contenus d'une trame ne peuvent pas être représentés dans la fenêtre correspondante.

9. Procédé selon l'une quelconque des revendications précédentes,
**caractérisé en ce que**
les trames représentées en fonction de la prescription de filtrage sont représentées dans une fenêtre supplémentaire (38), sous forme décodée, en particulier sous leur forme intégralement décodée.

10. Procédé selon la revendication 9,
**caractérisé par** l'étape supplémentaire suivante :
g) marquage d'une unité de protocole précise ou d'une valeur précise d'une unité de protocole pour dériver une prescription supplémentaire de filtrage.

11. Procédé selon la revendication 10,
**caractérisé par** l'étape supplémentaire suivante :
h) représentation par l'unité d'affichage de trames en fonction de la prescription de filtrage supplémentaire.

12. Procédé selon l'une quelconque des revendications précédentes,
**caractérisé par** l'étape supplémentaire suivante :
i) représentation par l'unité d'affichage de la pile de protocole correspondant à l'unité de données de protocole marquée ou à la valeur précise de l'unité de données de protocole et/ou du protocole correspondant et/ou du message correspondant et/ou du paramètre correspondant et/ou du nom de champ correspondant.

13. Procédé selon l'une quelconque des revendications précédentes,
**caractérisé par** l'étape supplémentaire suivante :
j) mise à disposition d'une possibilité de modification du contenu marqué de la trame marquée pour dériver une prescription de filtrage.

14. Procédé selon la revendication 13,
**caractérisé par** l'étape supplémentaire suivante :
k) mise à disposition du moyen « jokers » pour modifier le contenu ou d'un moyen pour indiquer un domaine de consigne pour dériver une prescription de filtrage.

15. Procédé selon l'une quelconque des revendications précédentes,
**caractérisé en ce que**
plusieurs prescriptions de filtrage dérivées sont appliquées en série sur un flux de données.

16. Procédé selon l'une quelconque des revendications précédentes,
**caractérisé en ce que**
la prescription de filtrage dérivée est inversée logiquement.

17. Testeur de protocole pour appliquer un procédé selon l'une quelconque des revendications 1 à 16, comportant :
un dispositif de filtrage pour filtrer un flux de données comprenant des trames ;
des moyens pour décoder le contenu d'une trame ;
une unité d'affichage
- pour représenter une trame sous sa forme décodée et
- pour représenter une trame en fonction de la prescription de filtrage ; et
des moyens pour marquer des éléments choisis par l'utilisateur, représentés par l'unité d'affichage ;
**caractérisé en ce que**
l'unité d'affichage est, en outre, constituée pour représenter un aperçu de trames du flux de données, où un attribut d'identification de la trame ainsi qu'au moins un contenu de la trame sont chaque fois affichés pour une trame ; et
pour marquer d'un attribut d'identification d'erreur ceux des contenus de la trame pour lesquels une erreur s'est produite lors de leur décodage.
